# EUROPÄISCHE PATENTSCHRIFT

(11) **EP 0 593 954 B1**
(45) Veröffentlichungstag und Bekanntmachung des Hinweises auf die Patenterteilung: **10.12.1997**
(21) Anmeldenummer: 93115722.6
(22) Anmeldetag: 29.09.1993
(51) Int. Cl.: B62B 1/26, B62B 5/06

(54) **Arbeitsgerätschaft zum Transportieren, Aufstellen und Lagern eines Gefahrenguts und dazugehöriger Rollkarren**
Working tool to transport, rise and lower a dangerous load and hand truck designe for this use
Outil de travail pour transporter, redresser et coucher une charge dangereuse et chariot destiné à cet usage

(30) Priorität: 20.10.1992 DE 9214145 U
(43) Veröffentlichungstag der Anmeldung: 27.04.1994
(73) Patentinhaber: Amstutz, Adrian, CH-6343 Risch (CH)
(72) Erfinder: Amstutz, Adrian, CH-6343 Risch (CH)
(74) Vertreter: Tiedtke, Harro, Dipl.-Ing.

(56) Entgegenhaltungen:
- CH-A- 642 919
- US-A- 2 910 304

## Beschreibung

Die Erfindung bezieht sich auf eine Arbeitsgerätschaft zum Transportieren, Aufstellen und Lagern eines Gefahrenguts gemäß dem Oberbegriff des Anspruchs 1 und auf ein Verfahren zum Transportieren, Aufstellen und Lagern eines Gefahrenguts gemäß dem Oberbegriff des Anspruchs 7.

Eine herkömmliche, gattungsgemäße Arbeitsgerätschaft zum Transportieren, Aufstellen und Lagern eines Gefahrenguts besteht beispielsweise aus einem Handkarren, der eine mit Rollen versehene Auffangwanne aufweist, deren Oberseite mit einem Gitterrost abgedeckt ist. Das Gefahrengut, beispielsweise ein Faß mit Flüssigkeit, wird mittels eines Krans oder eines Staplers auf den Gitterrost gehoben und mit dem Handkarren fest verbunden. Das Faß ist über die an der Auffangwanne befindlichen Rollen leicht an verschiedene Aufstellorte bewegbar. Eventuell aus dem Faß austretende Flüssigkeit wird in der darunterliegenden Auffangwanne aufgefangen und kann nicht in den Untergrund eindringen. Das Volumen der Auffangwanne kann so bemessen sein, daß die komplette Füllmenge des darauf stehenden Faßes aufgenommen werden kann. Die herkömmliche Arbeitsgerätschaft hat jedoch den Nachteil, daß zum Aufstellen eines befüllten Faßes zumindest ein Kran oder ein Stapler benötigt wird.

Desweiteren ist eine Arbeitsgerätschaft zum Transportieren, Aufstellen und Lagern eines Gefahrenguts bekannt, bei dem das Gefahrengut nicht direkt auf dem Gitterrost über der Auffangwanne aufgestellt ist, sondern auf einem über der Auffangwanne befindlichen Gestell angeordnet ist. Fässer können dabei beispielsweise auch liegend angeordnet sein. Die Auffangwanne hat unter Umständen nur ein begrenztes Volumen, so daß nicht die gesamte, eventuell austretende Flüssigkeit aufgefangen werden kann.

Eine gattungsgemäße Arbeitsgerätschaft zum Transportieren, Aufstellen und Lagern eines Gefahrengut sowie ein gattungsgemäßes Verfahren zum Transportieren, Aufstellen und Lagern eines Gefahrenguts sind aus der CH-A-642 919 bekannt. Gemäß dieser Druckschrift wird ein Gefahrengut auf einer Auffangwanne aufgestellt, so daß eventuell austretendes Gefahrengut in der Auffangwanne gesammelt werden kann. Auf einem Rollkarren wird das Gefahrengut mittels einer Stützvorrichtung abgestützt und transportiert. Der Rollkarren weist einen Handhebel zur Bedienung auf und dient dazu das Gefahrengut anzuheben, so daß es über der Auffangwanne aufgestellt ist.

Eine weitere Arbeitsgerätschaft offenbart die US-A-2 910 304. Mithilfe dieser Arbeitsgerätschaft läßt sich ein Gefahrengut in Form einer Kühlmittelflasche in eine Kopf-über-Lage schwenken. Dabei wird jedoch nur die Kühlmittelflasche als Ganzes in ihrer Lage verändert.

Der Erfindung liegt die Aufgabe zugrunde, eine Arbeitsgerätschaft zum Transportieren, Aufstellen und Lagern gemäß dem Oberbegriff des Patentanspruchs 1 sowie ein Verfahren zum Transportieren, Aufstellen und Lagern eines Gefahrenguts gemäß dem Oberbegriff des Patentanspruchs 7 so weiterzubilden, daß das Gefahrengut mit einfachen Mitteln bei hoher Bedienerfreundlichkeit sicher handzuhaben ist.

Diese Aufgabe wird erfindungsgemäß hinsichtlich der Arbeitsgerätschaft durch die Merkmale des Patentanspruchs 1 und hinsichtlich des Verfahrens durch die Merkmale des Patentanspruchs 7 gelöst.

Vorteilhafte Weiterbildungen sind in den abhängigen Ansprüchen definiert.

Ein bei der Arbeitsgerätschaft verwendbarer Rollkarren ist Gegenstand des Anspruchs 6.

Bei der erfindungsgemäßen Arbeitsgerätschaft wird kein Kran oder Hubstapler benötigt, um das Gefahrengut in die Auffangwanne zu stellen. Vielmehr ist es mit einfachen Mitteln und ohne zusätzlichen Kran möglich, Gefahrengut in eine Auffangwanne zu stellen. Der Rollkarren der Arbeitsgerätschaft verfügt über eine Wendevorrichtung, mittels der das Gefahrengut in eine Über-Kopf-Position schwenkbar ist. Wenn die Auffangwanne vor dem Wenden über das Gefahrengut gestüplt ist, steht das Gefahrengut nach dem Wenden in der Auffangwanne, so daß sich eventuell austretendes Gefahrengut in der Auffangwanne sammelt. Ein weiterer Vorteil der Erfindung ist darin zu sehen, daß das Gefahrengut direkt innerhalb der Auffangwanne aufgestellt wird, so daß die benötigte Raumhöhe für das aufgestellte Gefahrengut im wesentlichen gleich der Raumhöhe ist, die für ein ohne Auffangwanne aufgestelltes Gefahrengut benötigt wird. Mit der erfindungsgemäßen Arbeitsgerätschaft bzw. dem Rollkarren ist es ferner möglich den Aufstellort des Gefahrenguts jederzeit und besonders einfach zu ändern.

Gemäß einer vorteilhaften Weiterbildung nach Anspruch 2 ist der Rollkarren der Arbeitsgerätschaft einachsig ausgeführt und läßt sich in drei Stufen aus seiner stabilen, vertikalen ersten Lage über eine stabile, horizontale zweite Lage in eine stabile, vertikale dritte Lage überführen, in der das Gefahrengut kopfüber in der Auffangwanne steht.

Eine vorteilhafte Weiterbildung nach Anspruch 3 und Anspruch 7 besteht darin, daß die Wendevorrichtung durch sich in Längsrichtung des Rollwagens erstreckende bogenförmige Kufen gebildet ist, auf denen der Rollkarren in seine verschiedenen Lagen abrollt.

Die Erfindung wird nachfolgend anhand eines bevorzugten Ausführungsbeispiels unter Bezugnahme auf die Zeichnungen näher erläutert.

Es zeigen:
- Fig. 1: eine Seitenansicht eines erfindungsgemäßen Rollkarrens der Arbeitsgerätschaft,
- Fig. 2: eine Draufsicht auf den Rollkarren aus Fig. 1,
- Fig. 3: einen Schnitt entlang der Linie A-A aus Fig. 2,

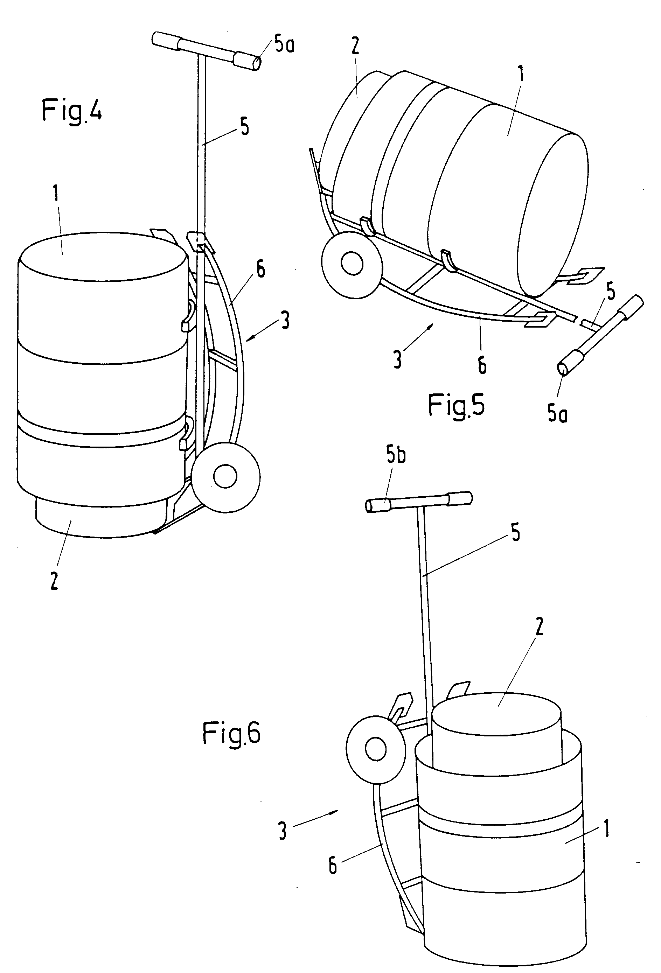

- Fig. 4: eine perspektivische Ansicht der erfindungsgemäßen Arbeitsgerätschaft in einer ersten Lage,
- Fig 5: eine perspektivische Ansicht der Arbeitsgerätschaft aus Fig. 4 in einer zweiten Lage und
- Fig. 6: eine perspektivische Ansicht der Arbeitsgerätschaft aus Fig. 4 in einer dritten Lage.

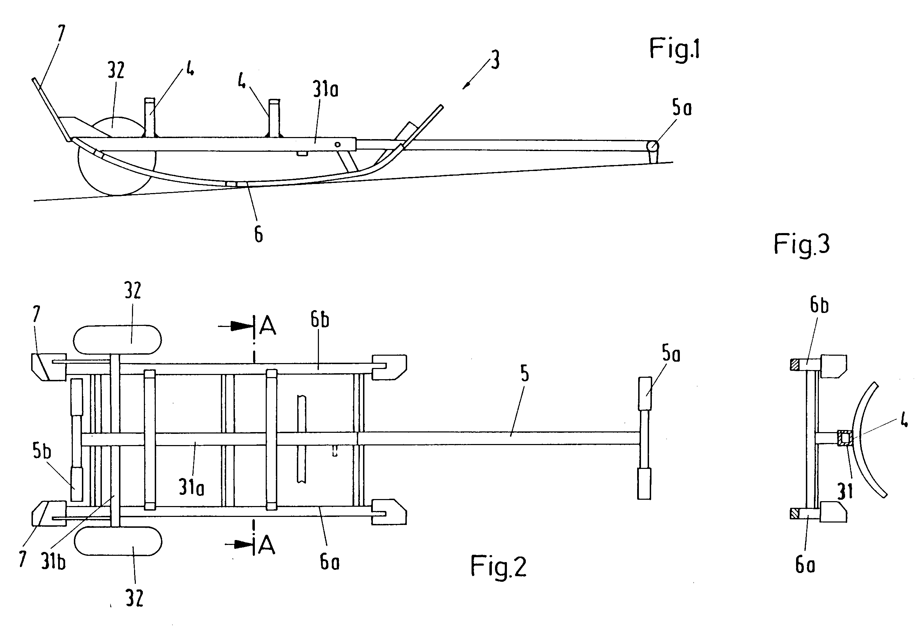

Gemäß den Fig. 1 bis 3 ist ein bevorzugtes Ausfünrungsbeispiel eines Rollkarrens 3 einachsig ausgeführt. Der Rollkarren 3 weist eine Stützvorrichtung 4 auf, auf der ein Gefahrengut 2 abstützbar ist. In dem gezeigten Ausführungsbeispiel ist das Gefahrengut 2 durch zylindrische Fässer gebildet, die beispielsweise Flüssigkeit enthalten. Die erfindungsgemäße Arbeitsgerätschaft und der erfindungsgemäße Rollkarren 3 sind für zylindrische Fässer besonders gut geeignet. Die Stützvorrichtung 4 ist mit dem Gestell des Rollkarrens 3 beispielsweise durch Verschweißen fest verbunden. Das Gestell des Rollkarrens 3 besteht im wesentlichen aus fest miteinander verbundenen Rohren 31a und 31b, die beispielsweise ebenfalls verschweißt sein können. An dem Gestell ist drehbar eine Achse mit zwei Rollrädern 32 befestigt. Es können jedoch auch mehrere Achsen vorgesehen sein. Das Rohr 31a ist hohl ausgeführt und nimmt einen Handhebel 5 verschieblich auf. Der Handhebel 5 ist in dem gezeigten Ausführungsbeispiel auf beiden Seiten mit jeweils einem Handgriff 5a und 5b ausgeführt, die gleichzeitig als Anschlag in jeweiligen Endstellungen des Handhebels 5 dienen. Der Handhebel 5 läßt sich relativ zum Gestell des Rollkarrens 3 so bewegen, daß er wechselweise auf einer der beiden Seiten des Rollkarrens 3 hervorsteht. In jeder seiner Endstellungen ist der Handhebel 5 mittels einer Blockiereinrichtung, wie beispielsweise einem Sicherungsbolzen, fixierbar.

Ferner weist der Rollkarren 3 eine Wendevorrichtung 6 auf, mittels der der Rollkarren 3 unter Zuhilfenahme des Handhebels 5 aus einer stabilen, vertikalen ersten Lage in eine stabile, horizontale zweite Lage und weiter in eine kopf-über gegenüber der ersten, vertikale dritte Lage überführbar ist. Die Wendevorrichtung 6 ist im wesentlichen durch sich in Längsrichtung des Rollkarrens 3 bogenförmig erstreckende Kufen 6a und 6b gebildet. Der zuvor erwähnte Handhebel 5 stellt ebenso einen Teil der Wendevorrichtung 6 dar. Der Bogen der Kufen 6a und 6b steht in der ersten Lage nach hinten hervor. Die Kufen 6a und 6b sind mit dem Gestell des Rollkarrens 3 beispielsweise durch Schweißen fest verbunden. Zur Versteifung sind Querstreben vorhanden, die die beiden Kufen 6a und 6b stützen.

Jede der Kufen 6a und 6b weist weiterhin an ihren beiden Enden jeweils einen Anschlag 7 auf, der in Verlängerung der Kufen 6a und 6b ausgebildet ist. Die Anschläge 7 sind schaufelförmig und begrenzen ein Verrutschen des Gefahrenguts 2 auf dem Rollkarren 3 während einer Kippbewegung. Gleichzeitig ist die Schaufelform der Anschläge 7 so gewählt, daß ein auf einem Untergrund stehendes Gefahrengut 2 untergriffen und durch Hebelwirkung angehoben werden kann, wie es von herkömmlichen Rollkarren bekannt ist. Im Unterschied zu den herkömmlichen Rollkarren sind die Anschläge 7 jedoch nicht nur auf der in der ersten Lage unteren Seite des Rollkarrens 3 vorhanden, sondern ebenso auf der Oberseite.

Der erfindungsgemäße Rollkarren 3 ist in einer besonderen Weise kippbar ausgeführt, was im Folgenden genauer beschrieben wird. In der Ausgangsstellung befindet sich der Rollkarren 3 in der vertikalen ersten Lage und ein Bedienpersonal steht hinter dem Rollkarren 3. Das Kippen des Rollkarrens 3 erfolgt bis zu einem vorbestimmten Kippwinkel um die Achse der Rollräder 32, indem das Bedienpersonal den oben überstehenden Handgriff 5a des in der ersten Endstellung befindlichen Handhebels 5 zu sich schwenkt, während die Rollräder 32 am Abrollen beispielsweise zusätzlich durch eine geeignete, nicht gezeigte Hemmeinrichtung gehindert sind. Das Kippen bis zu diesem Punkt erfolgt in Übereinstimmung mit dem Stand der Technik. Anschließend kommen die bogenförmigen Kufen 6a und 6b mit dem Untergrund in Kontakt und der Rollkarren 3 rollt auf den bogenförmigen Kufen 6a und 6b nach Überschreiten des vorbestimmten Kippwinkels aus der vertikalen ersten Lage in die horizontale zweite Lage ab. Die horizontale zweite Lage wird dabei über ein Abrollen auf einem ersten Teilbereich der Kufen 6a und 6b stabil erreicht, in der der Rollkarren 3 auf insgesamt vier Punkten auf dem Untergrund aufliegt; d. h. auf den beiden Rollrädern 32 und auf dem jeweiligen Mittelbereich der bogenförmigen Kufen 6a und 6b.

Nun wird der Handhebel 5 aus seiner ersten Endstellung gelöst, in der der Handgriff 5a vorsteht, und in seine zweite Endstellung überführt. Dazu muß der Handhebel 5 nicht notwendigerweise entlang des Rollkarrens 3 verschoben werden. Die Überführung in die zweite Endstellung kann beispielsweise auch durch Umstecken oder ähnliche Mittel erfolgen. In der zweiten Endstellung steht der Handhebel 5 mit dem Handgriff 5b auf der vormaligen Unterseite des nun liegenden Rollkarrens 3 vor. Er wird erneut mittels einer Blockiervorrichtung in dieser zweiten Endstellung gesichert, so daß er von dem Bedienpersonal gegriffen werdenkann. Zu diesem Zweck wechselt das Bedienpersonal die Seite des liegenden Rollkarrens 3, um den Handgriff 5b aufzunehmen und den Rollkarren 3 von der horizontalen zweiten Lage nach oben in die vertikale dritte Lage zu kippen. Beim Überführen des Rollkarrens 3 in die stabile, vertikale dritte Lage, die gegenüber der ersten Lage um 180°, also kopf-über, gedreht ist, wird auf einem vom ersten Teilbereich verschiedenen zweiten Teilbereich der Kufen 6a und 6b abgerollt.

Die erfindungsgemäße Arbeitsgerätschaft weist ferner eine Auffangwanne 1 auf, die eventuell austretendes Gefahrengut 2 auffängt. In dem gezeigten Ausführungsbeispiel ist das Gefahrengut 2, wie zuvor erwähnt, durch zylindrische Fässer mit einem vorbestimmten Durchmesser gebildet. An diese Fässer ist die Auffangwanne 1 angepasst. Die Auffangwanne 1 hat einen geringfügig größeren Durchmesser als das zylindrische Gefahrengut 2 und stellt ein Faß ohne Deckel dar. Die erfindungsgemäße zylindrische Auffangwanne 1 ist dadurch besonders vorteilhaft für die Verwendung mit zylindrischen Fässern als Gefahrengut 2. Das Volumen, das von der Auffangwanne 1 aufgefangen werden kann, ist gemäß dem bevorzugten Ausführungsbeispiel mindestens so groß gewählt, das das eventuell austretende Gefahrengut 2 vollständig aufgenommen werden kann. Dabei ist von Vorteil, daß die Auffangwanne 1 das Gefahrengut 2 eng umschließt, so daß im Schadenfall nur ein geringer Anteil des ausgetretenen Gefahrenguts 2 mit der Umgebungsluft in Berührung tritt. Wenn die Arbeitsgerätschaft beispielsweise für sich leicht verflüchtigende Flüssigkeiten als Gefahrengut 2 verwendet wird, kann somit der Anteil an verdunstender Flüssigkeit gering gehalten werden.

Weiterhin ist die Auffangwanne 1 mit Stützrippen an Ihrer Außenseite versehen, die eine hohe Steifigkeit gewährleisten. In die Auffangewanne 1 wird das Gefahrengut 2 hineingestellt, so daß die Oberkante des Gefahrenguts 2 geringfügig über die Oberkante der Auffangwanne 1 übersteht. Erfindungsgemäß soll zum Aufstellen des Gefahrenguts 2 keine Hilfe in Form eines Krans oder eines Staplers benötigt werden.

Das Aufstellen des Gefahrenguts 2 in der Auffangwanne 1 mit Hilfe der erfindungsgemäßen Arbeitsgerätschaft bzw. mit Hilfe des erfindungsgemäßen Rollkarrens 3 soll im Folgenden näher erläutert werden. Das Gefahrengut 2 wird von einem Lieferdienst in einer Über-Kopf-Position, d. h. mit der Oberseite nach unten zeigend, angeliefert. Über das auf dem Kopf stehende Gefahrengut 2 wird die im Durchmesser nur geringfügig größer dimensionierte Auffangwanne 1 übergestülpt. Die Dimensionen sind so bestimmt, daß das Überstülpen ohne unnötigen Kraftaufwand mit einem minimalen Geschick des Bedienpersonals erfolgen kann. Da die Bauhöhe der Auffangwanne 1 geringer ist als die des aufzustellenden Gefahrenguts 2, reicht die übergestülpte Auffangwanne 1 nicht ganz bis zum Boden des Gefahrenguts 2. Das Bedienpersonal fährt nun mit dem in der stabilen, vertikalen ersten Lage befindlichen Rollkarren 3 an das Gefahrengut 2 mit der übergestülpten Auffangwanne 1 heran. Dabei steht das Bedienpersonal hinter dem Rollkarren 3 und bewegt diesen auf den zu transportierenden Gegenstand zu.

Mit den als Schaufeln ausgebildeten Anschlägen 7, die sich an dem unteren Ende der beiden Kufen 6a und 6b in der Verlängerung befinden, wird das auf dem Untergrund stehende Gefahrengut 2 untergriffen. Zusätzlich wird die Auffangwanne 1 bzw. das Gefahrengut 2 mittels eines am Rollkarren 3 befestigten nicht gezeigten Transportbandes gesichert. Nun erfolgt in üblicher Weise mit Hilfe von Hebelkraft ein Anheben des Gefahrenguts 2 durch eine leichte Kippbewegung des Rollkarrens 3 um seine Achse der Rollräder 32. In dieser Lage stützt sich die über das Gefahrengut 2 gestülpte Auffangwanne 1 teilweise auf die Stützvorrichtung 4 des Rollkarrens 3 und liegt im wesentlichen auf den unten liegenden Anschlägen 7 auf. Der zu transportierende Gegenstand kann nun an einen beliebigen Aufstellort gefahren werden.

Am Aufstellort wird der Rollkarren 3, wie oben beschrieben von seiner vertikalen ersten Lage in die horizontale zweite Lage überführt. Dabei verlagert sich das Gewicht der Kombination Auffangwanne 1 /Gefahrengut 2 zunehmend von den unten liegenden Anschlägen 7 vollständig auf die Stützvorrichtung 4. In der horizontalen Lage verschiebt das Bedienpersonal den Handhebel 5 von seiner ersten Endstellung in die zweite Endstellung, bei der nun der auf der Seite der Rollachse liegende Handgriff 5b vom Rollkarren 3 als Hebel vorsteht. Anschließend wird der Rollkarren 3 in die vertikale dritte Lage überführt, die gegenüber der vertikalen ersten Lage um 180°, also Kopf-über, verdreht ist. Das Gewicht der Kombination Auffangwanne 1/Gefahrengut 2 wechselt allmählich auf die Anschläge 7, die den zuvor genannten Anschlägen 7 in Längsrichtung des Rollkarrens 3 gegenüberliegen. Die Anschläge 7 verhindern ein Abgleiten der Auffangwanne 1 auf den Untergrund, bis die dritte Lage erreicht ist, bei der die Auffangwanne 1 mit dem Untergrund in Berührung tritt. Das sichernde Transportband erfüllt zusätzlich die hemmende Wirkung gegen ein Verrutschen sowohl in Längs- als auch in Seitenrichtung des Rollkarrens 3. Durch die Wendebewegung der Wendevorrichtung 6 wird die zunächst von oben übergestülpte Auffangwanne 1 in eine Lage überführt, in der sie vollständig am Untergrund steht und das Gefahrengut 2 in ihr steht. Die nun unten liegenden Anschläge 7 werden unter dem Boden der Auffangwanne 1 herausgezogen und der Arbeitsvorgang somit beendet.

Bei der erfindungsgemäßen Arbeitsgerätschaft sind die Abstände in Längsrichtung des Rollkarrens 3 zwischen den an einer der Kufen 6a und 6b liegenden Anschläge 7 und die Seitenabstände der Kufen 6a und 6b so bemessen, daß das Gefahrengut 2 mit übergestülpter Auffangwanne 1 in etwa umgriffen wird; d. h. daß sich die zu transportierende Kombination aus Gefahrengut 2 und Auffangwanne 1 nur sehr wenig gegenüber dem Rollkarren 3 in dessen Längsrichtung bewegen kann, selbst wenn der Wendevorgang durchgeführt wird. Durch Vorsehen einer Vielzahl von Anschlägen 7 können in geeigneter Weise eine Vielzahl verschieden großer Gefahrengüter 2 mit entsprechenden Auffangwannen 1 verfahren werden.

In dem gezeigten Ausführungsbeispiel besteht die Wendevorrichtung 6 im wesentlichen aus zwei bogenförmigen Kufen 6a und 6b. Es können jedoch auch beliebig andere Abroll- oder Gelenkelemente an dem Rollkarren 3 vorhanden sein, die die Auffangwanne 1 und das Gefahrengut aus der Ausgangslage in eine Über-Kopf-Position schwenken.

Ferner soll erwähnt werden, daß das Aufstellen des Gefahrenguts 2 auch mit der dritten Lage des Rollkarren 3 begonnen werden kann, wobei das Wenden in etwa in umgekehrter Reihenfolge wie zuvor beschrieben abläuft. Der Vorteil bei dieser Vorgehensweise liegt darin, daß das Gefahrengut 2 nach dem Wenden unmittelbar an einen beliebigen Aufstellort weitertransportiert werden kann, weil in der ersten Lage die Rollräder 32 mit dem Untergrund in Berührung sind.

Es ist eine Arbeitsgerätschaft zum Transportieren, Aufstellen und Lagern eines Gefahrenguts (2) mit einer Auffangwanne (1), auf der das Gefahrengut (2) so aufstellbar ist, daß sich eventuell austretendes Gefahrengut (2) in der Auffangwanne (2) sammelt, und einem Rollkarren (3) offenbart, der eine Stützvorrichtung für das Gefahrengut (2) aufweist, wobei die Auffangwanne (1) über das Gefahrengut (2) stülpbar ist und der Rollkarren (3) eine Wendevorrichtung (6) aufweist, mittels der die über das Gefahrengut (2) gestülpte Auffangwanne (1) und das Gefahrengut (2) unter Zuhilfenahme eines Handhebels (5) in eine Kopf-über-Position schwenkbar sind, in der das Gefahrengut (2) in der Auffangwanne (1) steht. Das Gefahrengut (2) ist aus einer stabilen vertikalen ersten Lage in eine stabile horizontale zweite Lage überführbar ist, in der sich das Gefahrengut (2) in einer im wesentlichen waagrechten Position auf der Stützvorrichtung befindet. Der Rollkarren (3) ist weiter aus der zweiten horizontalen Lage in eine kopf-über gegenüber der ersten, vertikale dritte Lage überführbar.

## Patentansprüche

1. Arbeitsgerätschaft zum Transportieren, Aufstellen und Lagern eines Gefahrenguts (2) mit
einer Auffangwanne (1), auf der das Gefahrengut (2) so aufstellbar ist, daß sich eventuell austretendes Gefahrengut (2) in der Auffangwanne (2) sammelt, und
einem Rollkarren (3), der eine Stützvorrichtung (4) für das Gefahrengut (2) und einen Handhebel (5) zur Bedienung aufweist,
**dadurch gekennzeichnet, daß**
die Auffangwanne (1) über das Gefahrengut (2) stülpbar ist, wobei der Rollkarren (3) eine Wendevorrichtung (6) aufweist, mittels der die über das Gefahrengut (2) gestülpte Auffangwanne (1) und das Gefahrengut (2) unter Zuhilfenahme des Handhebels (5) in eine Kopf-über-Position schwenkbar sind, in der das Gefahrengut (2) in der Auffangwanne (1) steht.

2. Arbeitsgerätschaft nach Anspruch 1,
**dadurch gekennzeichnet, daß**
der Rollkarren (3) einachsig ausgeführt ist und mittels der Wendevorrichtung (6) aus einer stabilen vertikalen ersten Lage in eine stabile horizontale zweite Lage überfuhrbar ist, in der sich das daran befestigte Gefahrengut (2) mit der übergestülpten Auffangwanne (1) in einer waagrechten Position auf der Stützvorrichtung (4) des Rollkarrens (3) befindet, und wobei der Rollkarren (3) aus der horizontalen zweiten Lage in eine gegenüber der ersten, vertikale dritte Kopf-über-Lage überführbar ist, in der das Gefahrengut (2) in der Auffangwanne (1) steht.

3. Arbeitsgerätschaft nach Anspruch 2,
**dadurch gekennzeichnet, daß**
die Wendevorrichtung (6) des Rollkarrens (3) Anschläge (7), die ein Verrutschen des Gefahrenguts (2) mit der Auffangwanne (1) begrenzen, und sich in Längsrichtung des Rollkarrens (3) bogenförmig erstreckende Kufen (6a, 6b) aufweist, auf denen der Rollkarren (3) nach Überschreiten eines vorbestimmten Kippwinkels bei der Überführung des Rollkarrens (3) von der ersten, in die zweite und dritte Lage und umgekehrt abrollt.

4. Arbeitsgerätschaft nach einem der Ansprüche 2 oder 3,
**dadurch gekennzeichnet, daß**
die Wendevorrichtung (6) den Handhebel (5) aufweist, der wechselweise auf einer der beiden Seiten des Rollkarrens (3) als Hebel hervorsteht, um die Wendebewegung zu erleichtern.

5. Arbeitsgerätschaft nach einem der Ansprüche 3 oder 4,
**dadurch gekennzeichnet, daß**
das Gefahrengut (2) durch zylindrische Fäßer gebildet ist, die von der geringfügig größer dimensionierten zylindrischen Auffangwanne (1) aufgenommen werden, wobei die Anschläge (7) ein Anheben der Fäßer und der Auffangwanne (1) ermöglichen.

6. Rollkarren für eine Arbeitsgerätschaft nach einem der vorangehenden Ansprüche.

7. Verfahren zum Transportieren, Aufstellen und Lagern eines Gefahrenguts (2) mit folgenden Schritten
Transportieren eines Gefahrenguts (2) mit einem Rollkarren (3), der eine Stützvorrichtung (4) für das Gefahrengut (2) und einen Handhebel (5) zur Bedienung aufweist, und
Aufstellen des Gefahrenguts (2) auf einer Auffangwanne (1), so daß sich eventuell austretendes Gefahrengut (2) in der Auffangwanne (2) sammelt,
**dadurch gekennzeichnet, daß**
vor dem Aufstellen die Auffangwanne (1) über das Gefahrengut (2) gestülpt wird und die über das Gefahrengut (2) gestülpte Auffangwanne (1) mittels einer Wendevorrichtung (6) am Rollkarren (3) unter Zuhilfenahme des Handhebels (5) in eine Kopf-über-Position geschwenkt wird, in der das Gefahrengut (2) in der Auffangwanne (1) steht.

## Claims

1. Operating device for transporting, setting up and storing a hazardous substance (2), comprising
• a collecting trough (1) on which the hazardous substance (2) is set up in such a manner that a possibly exiting hazardous substance (2) gathers in the collecting trough (1), and
• a trolley (3) comprising a support device (4) for the hazardous substance (2) and a hand lever (5) for its operation,
**characterised in that**
the collecting trough (1) can be turned up over the hazardous substance (2), and the trolley (3) comprises a turning device (6) by means of which the collecting trough (1), which is turned up over the hazardous substance (2), and the hazardous substance (2) are pivotal with the aid of hand lever (5) into a head-over position in which the hazardous substance (2) stands in the collecting trough (1).

2. Operating device according to Claim 1,
**characterised in that**
the trolley (3) is mono-axial in design and transferable by means of the turning device (6) from a stable vertical first position into a stable horizontal second position in which the thereto attached hazardous substance (2) with the turned up collecting trough (1) is placed in a horizontal position on the support device (4) of the trolley (3), and the trolley (3) is transferable from the horizontal second position into a, relative to the first, vertical third head-over position in which the hazardous substance (2) stands in the collecting trough (1).

3. Operating device according to Claim 2,
**characterised in that**
the turning device (6) of the trolley (3) comprises stops (7) which restrict displacement of the hazardous substance (2) with the collecting trough (1), and skids (6a, 6b) which extend arclike in the longitudinal direction of the trolley (3) and on which the trolley (3) rolls off on exceeding a predetermined tilt angle during transfer of the trolley (3) from the first position into the second and third position, and vice versa.

4. Operating device according to one of Claims 2 or 3,
**characterised in that**
the turning device (6) comprises the hand lever (5) which protrudes alternately on one of the two sides of the trolley as a lever for the purpose of simplifying the turning movement.

5. Operating device according to one of Claims 3 or 4,
**characterised in that**
the hazardous substance (2) is formed by cylindrical barrels which are accommodated by a cylindrical collecting trough (1) which is of slightly larger dimensions, and the stops (7) allow the barrels and the collecting trough (1) to be lifted.

6. Trolley for an operating device according to one of the above claims.

7. Method of transporting, setting up and and storing a hazardous substance (2) in the following stages:
Transportation of a hazardous substance (2) with a trolley (3), which comprises a support device (4) for the hazardous substance (2) and a hand lever (5) for operating it, and
Setting up the dangerous substance (2) on a collecting trough (1), so that a possibly exiting hazardous substance (2) is collected in the collecting trough (2),
**characterised in that**,
prior to setting up, the collecting trough (1) is turned up over the hazardous substance (2), and the collecting trough (1) which is turned up over the hazardous substance (2) is pivoted by means of a turning device (6) on the trolley (3) and with the aid of a hand lever (5) into a head-over position in which the hazardous substance (2) stands in the collecting trough (1).

## Revendications

1. Outil de travail pour transporter, redresser et coucher une marchandise dangereuse (2) comportant
une cuve de réception (1) sur laquelle la marchandise dangereuse (2) peut être redressée de telle sorte que la marchandise dangereuse (2) sortant éventuellement soit recueillie dans la cuve de réception (1) et
un chariot (3) qui présente un dispositif de support (4) pour la marchandise dangereuse (2) et un levier à main (5) pour la manipulation,
caractérisé en ce que
la cuve de réception (1) peut être retournée sur la marchandise dangereuse (2), le chariot (3) présentant un dispositif de renversement (6) au moyen duquel la cuve de réception (1) retournée sur la marchandise dangereuse (2) et la marchandise dangereuse (2) peuvent pivoter à l'aide du levier à main (5) dans une position inversée dans laquelle la marchandise (2) se trouve dans la cuve de réception (1).

2. Outil de travail selon la revendication 1,
caractérisé en ce que
le chariot (3) dispose d'un seul axe et peut passer au moyen du dispositif de renversement (6) d'une première position verticale stable à une seconde position horizontale stable dans laquelle la marchandise dangereuse (2) fixée dans cette dernière se trouve avec la cuve de réception (1) retournée, dans une position horizontale, sur le dispositif de support (4) du chariot (3), et le chariot (3) pouvant passer de la seconde position horizontale à une troisième position verticale inversée par rapport à la première et dans laquelle la marchandise dangereuse (2) se trouve dans la cuve de réception (1).

3. Outil de travail selon la revendication 2,
caractérisé en ce que
le dispositif de renversement (6) du chariot (3) présente des butées (7) qui limitent un glissement de la marchandise dangereuse (2) avec la cuve de réception (1), ainsi que des patins (6a, 6b) s'étendant en forme d'arc dans le sens longitudinal du chariot (3) et sur lesquels, après le dépassement d'un angle de basculement prédéterminé, le chariot (3) roule lors du passage du chariot (3) de la première à la seconde et à la troisième position et inversement.

4. Outil de travail selon la revendication 2 ou la revendication 3,
caractérisé en ce que
le dispositif de renversement (6) présente le levier à main (5) qui s'avance alternativement sur l'un des deux côtés du chariot (3) en tant que levier pour faciliter le mouvement de renversement.

5. Outil de travail selon la revendication 3 ou la revendication 4,
caractérisé en ce que
la marchandise dangereuse (2) est formée par des fûts cylindriques qui sont logés par la cuve de réception (1) cylindrique d'une dimension légèrement plus grande, les butées (7) permettant un soulèvement des fûts et de la cuve de réception (1).

6. Chariot pour un outil de travail selon l'une quelconque des revendications précédentes.

7. Procédé pour transporter, redresser et coucher une charge dangereuse (2) comportant les étapes suivantes,
transporter une marchandise dangereuse (2) avec un chariot (3) qui présente un dispositif de support (4) pour la marchandise dangereuse (2) et un levier à main (5) pour la manipulation et
redresser la marchandise dangereuse (2) sur une cuve de réception (1) de telle sorte que la marchandise dangereuse (2) sortant éventuellement soit recueillie dans la cuve de réception (1),
caractérisé en ce que,
avant le redressement, la cuve de réception (1) est retournée sur la marchandise dangereuse (2) et en ce que la cuve de réception (1) retournée sur la marchandise dangereuse (2) est pivotée au moyen d'un dispositif de renversement (6) sur le chariot (3) à l'aide du levier à main (5) dans une position inversée dans laquelle la marchandise dangereuse (2) se trouve dans la cuve de réception (1).
